# EUROPÄISCHE PATENTANMELDUNG

(11) **EP 1 752 916 A1**
(43) Veröffentlichungstag der Anmeldung: **14.02.2007**
(21) Anmeldenummer: 06450101.8
(22) Anmeldetag: 17.07.2006
(51) Int. Cl.: G06K 19/067, G06K 19/077, G01S 13/75

(54) **SAW Transponder mit Drahtantenne**

(30) Priorität: 11.08.2005 AT 13522005
(71) Anmelder: CTR Carinthian Tech Research AG, 9524 Villach/St. Magdalen (AT)
(72) Erfinder: Fachberger, Rene, 9500 Villach (AT); Bruckner, Gudrun, 9500 Villach (AT)
(74) Vertreter: Beer, Manfred

(57) **Zusammenfassung**

Die erfindungsgemäß vorgeschlagene Verwendung von Drahtantennen (21,22,23,24) als Übertragungselement für SAW-Transponder (1) in Kombination mit einer Einbettung der Transponderkomponenten in ein dielektrisches Material (30) stellt einen signifikanten Fortschritt in Hinblick auf die Erweiterung der technischindustriellen Anwendbarkeit von SAW-ID-Marken und SAW-Sensoren dar. Durch die erfindungsgemäße Anordnung ist es möglich, kostengünstige, mechanisch, thermisch und/oder chemisch robuste SAW-Transponder (1) mit flexibel an spezifische Anforderungen anpassbaren Bauformen bzw. -größen und/oder elektromagnetischen Übertragungscharakteristika zu realisieren. Ebenso ist es durch die erfindungsgemäße Anordnung erstmals möglich, kompakte SAW-Transponder (1) für das ISM-S-Band zu bauen, die in die Oberflächen metallischer Bauteile ohne Beeinträchtigung der Funktionalitäten der SAW-ID-Marke bzw. des SAW-Sensors integriert werden können.

## Beschreibung

Die Erfindung betrifft einen Transponder für Identifikations- und/oder Sensoranwendungen bestehend aus mindestens einem signalerzeugenden Transponder-Element und wenigstens einer Antenne.

Die Verwendung von akustischen Oberflächenwellen (surface acoustic wave, SAW) - Elementen als physikalische oder chemische Sensoren und/oder Identifikationsmarken (ID-Marken) ist seit geraumer Zeit bekannt und auch in kommerziellen Produkten umgesetzt. Besonders vorteilhaft an derartigen Systemen ist, dass sie kontaktfrei und passiv betrieben werden können, d.h. keine Energieversorgung, wie beispielsweise eine Batterie, im Bereich der ID-Marke bzw. des Sensors erforderlich ist. Für den kontaktfreien Betrieb ist nur eine Antenne erforderlich, die elektromagnetische Wellen eines Abfragesignals von einem Lesegerät empfängt und das von dem SAW-Element generierte Antwortsignal zurücksendet. Die Art und Form der Transponder, und damit verbunden dieser Antennen, ist von entscheidender Bedeutung für die Anwendbarkeit von passiven SAW-Transpondern.

In kommerziell erhältlichen passiven SAW-Transpondern werden für die Signalübertragung in der Regel Planarantennen auf einem dielektrischen Trägermaterial verwendet. Das eigentliche, signalerzeugende SAW-Element ist dabei meist in einem Metall- oder Keramikgehäuse untergebracht, das auf der Trägerplatte der Planarantenne angeordnet ist. Für technische Anwendungen können derartige Anordnungen in abgedichteten, meist zwei- oder mehrteiligen Kunststoffgehäusen untergebracht werden, um das System mechanisch sowie vor Verschmutzung und/oder korrosiven Angriffen zu schützen. Ein alternativer Aufbau, wie er beispielsweise für die Temperaturüberwachung von Leiterseilen an Hochspannungsleitungen verwendet werden kann (Teminova et. al., Proc. Sensor 2005, Vol. II), basiert auf der Verwendung einer Schlitzantenne. Beiden Systemen ist gemein, dass die Antenne, für eine bestimmte Betriebsfrequenz und Leistung, in Form und Größe wenig flexibel ist und signifikant die Form und Größe des SAW-Transponders insgesamt beeinflusst. Zudem sind derartige Transponder vergleichsweise anfällig gegen Beschädigungen, z.B. mechanische Verformungen der Schlitzantenne oder Undichtheiten der Schutzgehäuse.

Eine weitere alternative Möglichkeit zum Bau einer Antenne für SAW-Sensoren ist aus DE 10054198 A1 bekannt. In diesem Dokument wird, neben dem Einsatz herkömmlicher Planarantennen auf keramischem Träger, in einer Ausführungsform die Verwendung einer Draht-Schleifenantenne vorgeschlagen. Diese Drahtschleife wird dabei vorteilhafterweise in eine Vergussmasse mit hoher mechanischer Stabilität eingebettet, die sich auf dem metallischen Gehäuse des eigentlichen SAW-Sensors befindet. Obwohl ein derartiger Aufbau vom Prinzip her einen kompakten Aufbau erlaubt, sind Größe und Form der Antenne weitgehend durch die Geometrie des metallischen Gehäuses des SAW-Elementes vorgegeben und nur bedingt bzw. mit beträchtlichem Aufwand an spezifische Anwendungen anpassbar. Zudem sind im Einsatz unter Realbedingungen verschiedene praktische Probleme zu erwarten. Beispielsweise ist ein derartiges Design, bedingt durch die unterschiedlichen Wärmeausdehnungskoeffizenten der Materialien, für einen Einsatz bei höheren, insbesonders aber bei wechselnden Temperaturen nur bedingt geeignet. Ebenso können auf die Grenzfläche zwischen vergossener Antenne und metallischem SAW-Gehäuse wirkende Scherkräfte zu einem vorzeitigen Versagen des Bauteils führen. In weiterer Folge sind derartige Konstruktionen erfahrungsgemäß auch wenig für den Einsatz in chemisch aggressiven Umgebungen geeignet, da korrosiv wirkende Substanzen durch Kapillarkräfte in, beispielsweise durch thermische Ausdehnung entstandene, Spalten insbesonders in der Grenzfläche eindringen und dort zerstörend tätig werden können.

Für einen praktischen Einsatz einer ID-Marke oder eines Sensors sind in der Regel die Baugröße und -form zusammen mit entsprechenden mechanischen, thermischen und/oder chemischen Stabilitäten des Sensors bzw. der ID-Marke die entscheidenden technischen Kriterien, gefolgt vom Preis und somit dem Aufwand der Herstellung und des Einsatzes. Sensoren bzw. ID-Marken sollten mit möglichst geringem Aufwand und voller Funktionalität integrierbar sein, ohne die Funktionalität der zu überwachenden bzw. zu identifizierenden Geräte oder Objekte zu beeinträchtigen oder signifikante Änderungen an der Konstruktion bzw. dem Design notwendig zu machen. Dies macht möglichst kompakte, robuste SAW-Transponder wünschenswert. Besonders nützlich wäre es auch, SAW-Transponder bündig oder auch versenkt auch in metallische Objektoberflächen integrieren zu können, beispielsweise um sie vor Beschädigungen zu schützen und/oder unsichtbar zu machen. Letzteres ist insbesonders ein Kriterium wenn das Erscheinungsbild einer Produktoberfläche nicht verändert werden darf oder beispielsweise bei Verwendung als verdecktes Diebstahlschutz-System.

Neben der Miniaturisierung ist es für einen praktischen Einsatz von beträchtlichem Vorteil, die Eigenschaften passiver SAW-Transducer möglichst flexibel an spezifische Anwendungserfordernisse anpassen zu können. Dies betrifft die Geometrie, die Einbaubarkeit inklusive der Möglichkeit zur flexiblen Positionierung von Befestigungselementen ebenso wie die Stabilität des Transponders insgesamt unter Betriebsbedingungen. Mit vorbekannten Systemen ist dies, ebenso wie die Miniaturisierung, nur eingeschränkt möglich; so ist beispielsweise bei Verwendung von Transpondern mit Kunststoffgehäuse die Anbringung zusätzlicher Bohrungen für die Befestigung nicht oder nur mit großem Aufwand für Redesign des Gehäuses und zusätzliche Dichtungselemente möglich. Bei Verwendung von SAW-Transpondern gemäß dem Stand der Technik ist es daher in der Regel notwendig, das zu überwachende Objekt an die Anforderungen des Transponders anzupassen, was einer verbreiteten praktischen Anwendung von SAW-Sensorsystemen bzw. SAW-ID-Marken oft entgegensteht.

Der Erfindung liegt die Aufgabe zu Grunde, Transponder zur Verfügung zu stellen, die kompakter, robuster und gleichzeitig flexibler einsetzbar sind als vorbekannte Systeme.

Gelöst wird diese Aufgabe erfindungsgemäß mit einem Transponder, welcher die Merkmale des Anspruches 1 aufweist.

Bevorzugte und vorteilhafte Ausführungsformen sind Gegenstand der Unteransprüche.

Erfindungsgemäß wird zunächst vorgeschlagen, anstelle der üblicherweise in passiven SAW-Transpondern für die Signalübertragung verwendeten Antennentypen Drahtantennen zu verwenden. Die Übertragungscharakteristika von Drahtantennen können, beispielsweise durch Variation der Form, Ausrichtung und/oder Länge der Antenne, einfach und flexibel an spezifische Anforderungen einer Anwendung angepasst werden. Weiters stellen Drahtantennen, im Vergleich zu Planar- oder Schlitzantennen, eine äußerst kostengünstige technische Lösung dar. Problematisch bei der Verwendung von Drahtantennen ist, dass derartige Antennen, insbesonders in kompakten Bauformen, geringe mechanische Stabilitäten aufweisen. Eine, unter Umständen bereits geringfügige, Verformung der Antenne kann ausreichen um die Antennencharakteristik signifikant zu verändern und dadurch zu einer Funktionsstörung zu führen. Ein weiterer Punkt ist, dass die Möglichkeit zur Miniaturisierung von Antennen für eine gegebene Betriebsfrequenz durch physikalische Gesetzmäßigkeiten limitiert ist. Für eine Signaleinkopplung ist eine Antennen-Mindestlänge von λ/4 erforderlich, wobei λ (Lambda) die Vakuum-Wellenlänge der elektromagnetischen Strahlung für die jeweilige Betriebsfrequenz bezeichnet. Bei einer Betriebsfrequenz im freien ISM-S-Band (~ 2,45 GHz) entspricht das einer minimalen Antennenlänge von 31 mm.

Um diese Probleme zu lösen und die vorteilhaften Eigenschaften von Drahtantennen in praktischen Transponderanwendungen nutzen zu können, wird vorgeschlagen, an mindestens ein signalerzeugendes SAW-Element in einem hermetisch dichten, HF (high frequency) - tauglichen Gehäuse eine oder mehrere Drahtantennen mit angepasster, für die Anwendung vorteilhafter Geometrie anzuschließen und diese Kombination vollständig in ein elektrisch nicht leitfähiges, dielektrisches Material, beispielsweise einen polymeren oder keramischen Werkstoff, einzubetten, welches die elektronischen Bauteile schützt und mechanisch stabilisiert und gleichzeitig die effektiv erforderliche konstruktive Antennenlänge reduziert.

Die Einbettung aller Transponderkomponenten in ein dielektrisches Material erfüllt mehrere, für die Funktion sowie die Miniaturisierbarkeit eines SAW-Transponders wichtige Funktionen. Durch die Einbettung werden die Transponder-Bauteile, insbesonders die Antennen, auch bei starken mechanischen und/oder thermischen Belastungen, wie beispielsweise Stößen oder raschen Heiz/Kühl-Zyklen, an ihren festgelegten Positionen bzw. in ihren vorgegebenen Formen gehalten, wodurch gleich bleibende Antenneneigenschaften gewährleistet werden können. Gleichzeitig stellt die Einbettung insgesamt einen effektiven Schutz des Transponders vor mechanischen oder sonstigen physikalischen Belastungen dar und erlaubt eine Anwendung unter entsprechenden Bedingungen. Der zweite essentielle Punkt ist die Ausnützung der dielektrischen Eigenschaften des Einbettungsmaterials um die erforderlichen konstruktiven Antennenlängen zu reduzieren. Dies ermöglicht eine signifikante Reduktion der erforderlichen Baugröße und erlaubt dadurch beispielsweise den Bau von kompakten und auch in metallische Bauteile integrierbaren passiven SAW-Transpondern. Als dritten Punkt schützt die Einbettung in eine chemisch inerte, hermetisch dichte Umhüllung die Transponderkomponenten vor korrosiven Angriffen und erlaubt somit eine Anwendung auch unter chemisch rauen Bedingungen.

Weitere Einzelheiten, Merkmale und Vorteile des erfindungsgemäßen Transponders ergeben sich aus der nachstehenden Beschreibung unter Bezugnahme auf die angeschlossenen Zeichnungen, in welchen bevorzugte Ausführungsformen dargestellt sind. Es zeigt Fig. 1 eine perspektivische Darstellung einer Ausführungsform des erfindungsgemäßen Transponders, Fig. 2 eine perspektivische Darstellung einer weiteren Ausführungsform, Fig. 3 eine dritte Ausführungsform des erfindungsgemäßen Transponders in einem Querschnitt, und Fig. 4 und 5 weitere Ausführungsformen im Querschnitt.

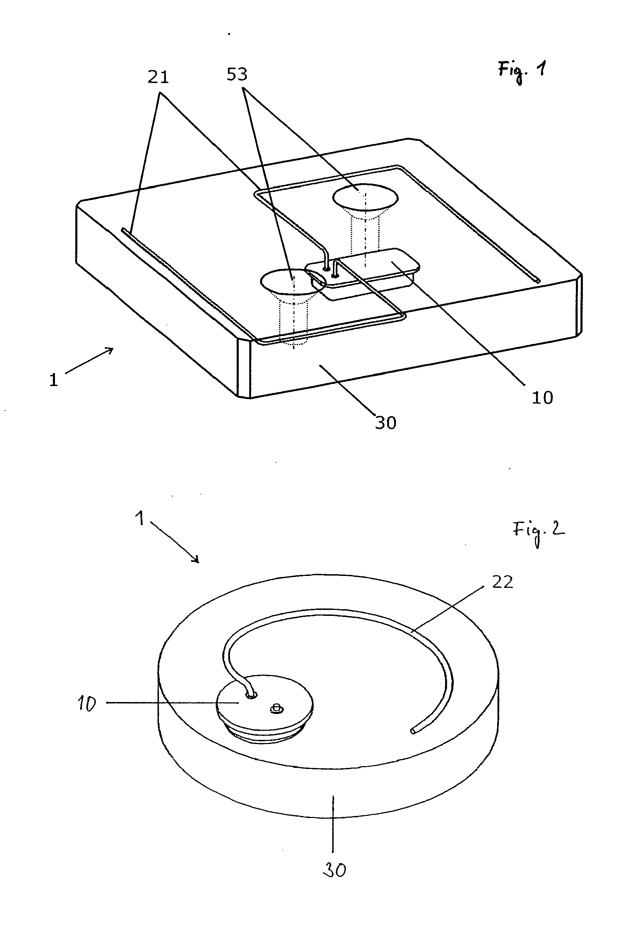

Der primäre Vorteil der Verwendung von Drahtantennen 21,22,23,24 ist, dass Form und Anordnung in einem SAW-Transponder 1 äußerst flexibel an die jeweilige Anwendung, insbesonders das Platzangebot und die gewünschte Abstrahlcharakteristik, angepasst werden können. In Fig. 1 ist exemplarisch eine mögliche Ausführung eines SAW-Transponders 1 mit einer im Wesentlichen S-förmigen Dipol-Drahtantenne 21 in Form offener Planarschleifen mit axialem Abstrahlverhalten, eingebettet in ein elektrisch nicht leitfähiges, dielektrisches Material 30 mit anwendungsspezifischer Form und integrierten Vorrichtungen zur mechanischen Befestigung 53 des Transponders 1, dargestellt. Das dielektrische Material 30 kann aus keramischen Formmassen gebildet sein, welche eine relative Dielektrizitätskonstante εᵣ im Bereich von ca. 8 bis 13 aufweisen. Besonders vorteilhaft ist der Einsatz von keramischen Formmassen auf A1203-Basis mit einer Dielektrizitätskonstante εᵣ im Bereich von 9 bis 10. Durch die erfindungsgemäße Einbettung in die Keramik lassen sich die Abmessungen des SAW-Transducers im Vergleich einer Anordnung an der Umgebungsluft (εᵣ = 1) um ca. 2/3 verringern.

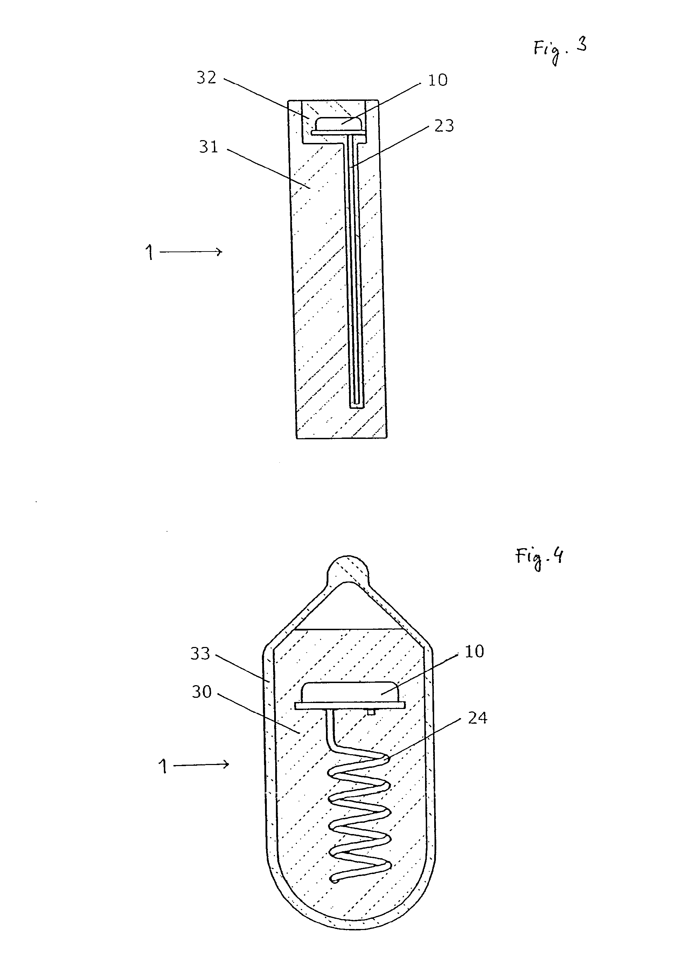

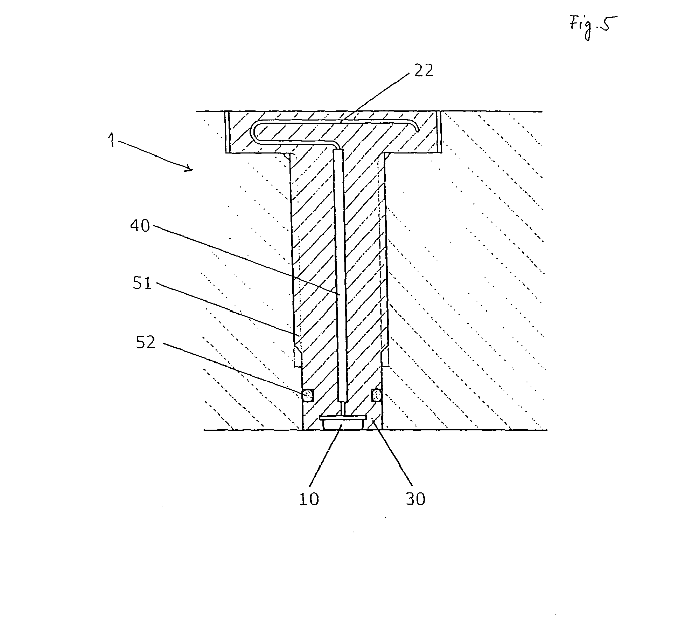

In Fig. 2 ist eine Kompakt-Anordnung eines im Wesentlichen scheibenförmigen SAW-Transponders 1 dargestellt. Diese Ausführungsform ist für Anwendungen mit beschränktem Platzangebot bzw. für eine, auch versenkte, Integration in eine metallische Umgebung besonders geeignet. Bei Einbau in ein metallisches Bauteil ist ein Mindestabstand zwischen Antenne und der metallischen Umgebung erforderlich, um eine Störung durch Reflektion der Funkwellen bzw. eine Verstimmung der Antenne durch Veränderung des Abstrahl-Widerstands durch die metallischen Flächen zu vermeiden. Durch das limitierte Platzangebot ist es hier, in Kombination mit der in Folge näher erläuterten dielektrischen Wirkung des Einbettungsmaterials 30 auf die Antennencharakteristika, vorteilhaft, eine massefreie Monopol-Drahtantenne 22 zu verwenden, d.h. den zweiten Anschluss nicht mit einer Antenne zu verbinden oder auf Masse zu legen, sondern offen zu lassen. Die geometrische Form der Antenne 22 ist hier wiederum an die Anwendung anpassbar und kann beispielsweise, wie in Fig. 3 dargestellt, auch eine gestreckte Antenne 23 sein. Weitere denkmögliche, mit Drahtantennen einfach realisierbare und für bestimmte Anwendungen vorteilhafte Antennenformen umfassen beispielsweise geschlossene Drahtschleifen ("Loopantennen"), oder Helixantennen 24, wie beispielhaft in Fig. 4 dargestellt. Einen zusätzlichen Vorteil von Drahtantennen 21,22,23,24 stellt die Möglichkeit dar, das signalerzeugende SAW-Element 10 und die Sende/Empfangsantenne durch eine HF-taugliche Verbindung, beispielsweise ein Koaxialkabel 40, zu verbinden und dadurch räumlich zu separieren, wie in Fig. 5 exemplarisch dargestellt.

Ein weiterer Vorteil der Verwendung von Drahtantennen 21,22,23,24 ist die einfache Anpassung des Abstrahlwiderstands der Antenne an die Eingangsimpedanz des SAW-Elements. In vorbekannten Systemen geschieht dies zumeist über eigene Anpass-Schaltungen. Bei Verwendung der erfindungsgemäßen eingebetteten Drahtantennen 21,22,23,24 ist dies, in Kombination mit geeigneten SAW-Elementen, nicht erforderlich. Die Anpassung kann, innerhalb gewisser physikalischer Grenzen, über die Wahl der Antennendrahtlänge erfolgen. Nach dem selben Schema ist es auch möglich, die Antenne(n) an unterschiedliche Umgebungsbedingungen, z.B. unterschiedliche Dielektrika, anzupassen.

Für den Aufbau kompakter, funkabfragbarer SAW-Transponder 1 sind die dielektrischen Eigenschaften des Einbettungsmaterials 30 bei der Betriebsfrequenz ein entscheidender Faktor. Bei nicht eingebetteten Antennen ergibt sich die minimale Antennenlänge unmittelbar aus der Betriebsfrequenz. Bei einer Einbettung in ein Dielektrikum erhöht sich die effektive Antennenlänge in Abhängigkeit der relativen Dielektrizitätskonstante des Dielektrikums εᵣ für die entsprechende Betriebsfrequenz. Dadurch ist es möglich, die konstruktive Antennenlänge im Vergleich zu nicht eingebetteten Antennen um einen Faktor von bis zu 1/√εᵣ, zu verringern. Analog ist es auch möglich, den erforderlichen Mindestabstand zu metallischen Flächen um den selben Faktor zu verringern. In Summe ist es, anders als mit vorbekannten Systemen, somit möglich, kompakte passive SAW-Transponder 1 mit lateralen Abmaßen < 30 mm für Betriebsfrequenzen im Bereich des freien ISM-S-Bandes zu bauen und derartige passive Transponder 1 auch in unmittelbarer Nähe von bzw. eingebaut in Oberflächen metallischer Objekte zu betreiben.

Die Auswahl des Einbettungsmaterials 30 hängt neben den mechanischen und dielektrischen Eigenschaften von der Verarbeitbarkeit und gegebenenfalls der thermischen und/oder chemischen Beständigkeit ab. Bezüglich letzterem Punkt ermöglicht die Einbettung in einen geeigneten Werkstoff 30 eine gas- und flüssigkeitsundurchlässige, hermetische Abdichtung der Transponderkomponenten und somit einen zuverlässigen Korrosionsschutz. Für bestimmte Materialien, die beispielsweise aus Gründen der chemischen Beständigkeit und/oder von Prozessanforderungen, wie Sterilisierbarkeit, als Hüllenmaterial gewünscht sind, bei denen eine direkte Einbettung aber nicht möglich ist, ist eine zweistufige Einhüllung vorteilhaft. Die elektronischen Komponenten des SAW-Transponders 1 werden zunächst erfindungsgemäß in ein geeignetes Material 30 eingebettet und diese Einheit dann in eine entsprechende, z.B. chemoresistente, Sekundärhülle 33 verpackt, beispielsweise in Glas bzw. Quarz eingeschmolzen, wie beispielhaft in Fig. 4 dargestellt. Vorteilhaft an dieser Vorgangsweise ist, dass die Transponderkomponenten optimal geschützt sind und die Form der Primäreinbettung 30 des SAW-Transponders 1 in in einfacher Weise für die Umhüllung mit einer, vorzugsweise einfachen und kostengünstigen, Sekundärhülle 33 optimiert werden kann.

Die Einbettung in ein Dielektrikum kann wahlweise, abhängig von der Geometrie, der Wahl des Materials 30, den Einsatzbedingungen und den zu produzierenden Stückzahlen, mittels verschiedener Verfahren durchgeführt werden. Da bei der Mehrzahl der Einbettverfahren erhöhte Temperaturen von bis zu einigen 100 °C auftreten, ist es hier vorteilhaft, Hochtemperaturbeständige SAW-Elemente zu verwenden, die literaturgemäß dauerhaft Temperaturen > 400 °C und kurzzeitig Temperaturen > 600 °C standhalten können. Gleichzeitig ist es vor dem Einbetten unabdingbar, den bzw. die eigentlichen SAW-Kristall(e) in ein hermetisch dichtes Gehäuse einzubauen um die Oberfläche des signalerzeugenden Elements vor direktem Kontakt mit der Einbettungsmasse zu schützen. Hier kommen vorteilhafterweise keramische oder metallische Standard-Mikroelektronikgehäuse für Hochfrequenzanwendungen zum Einsatz. Für die Produktion von SAW-Transpondern 1 besonders vorteilhafte Einbettungsverfahren sind einerseits Spritzguss-Verfahren für die Einbettung in polymere Werkstoffe, andererseits (Niedertemperatur-) Sinterpressverfahren, insbesonders bei Einbettung in keramische oder duromere Formmassen sowie Eingießverfahren unter Verwendung chemisch und/oder thermisch härtender, organisch-polymerer oder anorganischer, beispielsweise silikatisch-glasartiger und/oder keramischer Formmassen. Bei Verwendung polymerer Formmassen kann es anwendungsabhängig vorteilhaft sein, faserverstärkte, besonders vorzugsweise Glasfaserverstärkte, oder sonstig, vorzugsweise mineralisch, gefüllte Materialien zu verwenden, um dadurch beispielsweise mechanische und thermische Festigkeiten zu verbessern und gleichzeitig die, bei organischen Werkstoffen vergleichsweise niedrigeren, relativen Dielektrizitätskonstanten zu erhöhen. Insbesonders beim Vergießen ist es zudem wahlweise möglich, die Bauteile in einem Block einzugießen oder die Transponderkomponenten in einen geeigneten Trägerbauteil 31 einzubauen und die verbleibenden Hohlräume mit einer, vorzugsweise niederviskosen, Vergussmasse auszugießen, wie beispielhaft in Fig. 4 dargestellt.

Die Außenseite des Transponders 1 kann entsprechend den Anforderungen der Anwendungen gestaltet werden, wie in Fig. 1 - Fig. 5 exemplarisch dargestellt und umfasst auch die Möglichkeit, mechanische Funktionalitäten, wie beispielsweise ein Befestigungsgewinde 51 und/oder Dichtungen 52, zu integrieren, oder auch Befestigungsöffnungen 53 durch den Transponder 1 selbst vorzusehen und somit hochfunktionelle SAW-Transponder 1 zu produzieren. Insbesonders bei Verwendung von polymeren Einbettungsmassen 30 ermöglicht die erfindungsgemäße Anordnung auch, Befestigungsbohrungen 53 oder ähnliche Anpassungen des Transponders an die Anwendung erst durch den Endnutzer, beispielsweise bei der Montage, vornehmen zu lassen. Durch die vollständige Einbettung sind dabei alle Transponderkomponenten in ihrer Lage fixiert und hermetisch dicht abgeschirmt, sodass eine **spanende** Bearbeitung des Einbettungsmaterials 30 kein erhöhtes Beschädigungsrisiko, beispielsweise durch Korrosion, bewirkt. Wie aus Fig. 1 ersichtlich, können derartige Durchbrüche 53, etc. auch im inneren Bereich des Transponders 1 angebracht werden, solange dadurch nicht Transponderkomponenten verletzt werden.

Geeignete Bauformen erlauben eine Verwendung der erfindungsgemäßen Anordnung zum Bau von SAW-Sensoren, insbesonders für physikalische Parameter. Temperaturmessungen sind, ein geeignetes SAW-Element vorausgesetzt, prinzipiell mit allen dargestellten Aufbauten möglich, durch die Wärmekapazität des Einbettungsmaterials 30 aber in der zeitlichen Dynamik begrenzt. Zur Verbesserung des dynamischen Ansprechverhaltens ist beispielsweise ein Einbau eines Wärmeleitelements zwischen dem Messpunkt und dem Gehäuse des SAW-Sensorelements 10 oder eine Anordnung des Gehäuses mit dem SAW-Sensorelement 10 unmittelbar am Messpunkt, wie in Fig. 5 demonstriert, vorteilhaft. Für die Beschaltung elektrotechnischer SAW-Sensoren können beispielsweise eingebettete Kontakte realisiert werden. Gleichfalls ist es möglich, Druck/Zugsensoren bzw. Drehmomentsensoren zu realisieren.

### Zusammenfassend kann ein Ausführungsbeispiel wie folgt beschrieben werden:

Die erfindungsgemäß vorgeschlagene Verwendung von Drahtantennen 21,22,23,24 als Übertragungselement für SAW-Transponder 1 in Kombination mit einer Einbettung der Transponderkomponenten in ein dielektrisches Material 30 stellt einen signifikanten Fortschritt in Hinblick auf die Erweiterung der technisch-industriellen Anwendbarkeit von SAW-ID-Marken und SAW-Sensoren dar. Durch die erfindungsgemäße Anordnung ist es möglich, kostengünstige, mechanisch, thermisch und/oder chemisch robuste SAW-Transponder 1 mit flexibel an spezifische Anforderungen anpassbaren Bauformen bzw. -größen und/oder elektromagnetischen Übertragungscharakteristika zu realisieren. Ebenso ist es durch die erfindungsgemäße Anordnung erstmals möglich, kompakte SAW-Transponder 1 für das ISM-S-Band zu bauen, die in die Oberflächen metallischer Bauteile ohne Beeinträchtigung der Funktionalitäten der SAW-ID-Marke bzw. des SAW-Sensors integriert werden können.

## Patentansprüche

1. Transponder (1) für Identifikations- und/oder Sensoranwendungen bestehend aus mindestens einem signalerzeugenden Transponder-Element (10) und wenigstens einer Antenne (21,22,23,24), **dadurch gekennzeichnet, dass** die Antenne (21, 22, 23, 24) eine Drahtantenne ist, und dass die Komponenten des Transponders, d.h. zumindest Antenne (21,22,23,24) und signalerzeugendes Transponder-Element (10), gemeinsam in einem elektrisch nicht leitfähigen, dielektrischen Material (30) eingebettet sind.

2. Transponder (1) nach Anspruch 1, **dadurch gekennzeichnet, dass** das signalerzeugende Transponder-Element (10) ein passiv betriebener Bauteil basierend auf akustischen Oberflächenwellen (SAW) ist.

3. Transponder (1) nach Anspruch 1 oder 2, **dadurch gekennzeichnet, dass** die Betriebsfrequenz des Transponders (1) vorzugsweise in einem freien Frequenzband, beispielsweise 868 bis 870 MHz, 2,400 bis 2,484 GHz oder 5,725 bis 5,875 GHz, liegt.

4. Transponder (1) nach einem der Ansprüche 1 bis 3, **dadurch gekennzeichnet, dass** die Drahtantenne eine massefreie Monopolantenne (22) ist.

5. Transponder (1) nach einem der Ansprüche 1 bis 3, **dadurch gekennzeichnet, dass** die Drahtantenne ein Dipolantenne (21) ist.

6. Transponder (1) nach einem der Ansprüche 4 bis 5, **dadurch gekennzeichnet, dass** die Drahtantenne in Form einer gestreckten Antenne (23) ausgeführt ist.

7. Transponder (1) nach einem der Ansprüche 4 bis 5, **dadurch gekennzeichnet, dass** die Drahtantenne in Form einer Helixantenne (24) ausgeführt ist.

8. Transponder (1) nach einem der Ansprüche 1 bis 3, **dadurch gekennzeichnet, dass** die Drahtantenne in Form einer geschlossenen Drahtschleife ausgeführt ist.

9. Transponder (1) nach einem der Ansprüche 1 bis 8, **dadurch gekennzeichnet, dass** das dielektrische Material (30) die Antenne (21, 22, 23, 24) mechanisch stabilisiert.

10. Transponder (1) nach einem der Ansprüche 1 bis 9, **dadurch gekennzeichnet, dass** das dielektrische Material (30) durch Erhöhung der effektiven Antennenlänge und/oder Verminderung des erforderlichen Abstands zu metallischen Bauteilen die erforderliche Baugröße des Transponders (1) verringert.

11. Transponder (1) nach einem der Ansprüche 1 bis 10, **dadurch gekennzeichnet, dass** das dielektrische Material (30) einen mechanischen, thermischen und/oder chemischen Schutz der Transponderkomponenten bietet.

12. Transponder (1) nach einem der Ansprüche 1 bis 11, **dadurch gekennzeichnet, dass** das dielektrische Material (30) aus wenigstens zwei Schichten aus, gegebenenfalls unterschiedlichem, elektrisch nicht leitfähigem Material besteht.

13. Transponder (1) nach einem der Ansprüche 1 bis 12, **dadurch gekennzeichnet, dass** das dielektrische Material (30) durch eine Keramik, insbesondere auf A1203-Basis, gebildet ist.

14. Transponder (1) nach einem der Ansprüche 1 bis 12, **dadurch gekennzeichnet, dass** das dielektrische Material (30) durch eine chemisch und/oder thermisch härtende, organisch-polymere Formmasse gebildet ist.

15. Transponder (1) nach Anspruch 13, **dadurch gekennzeichnet, dass** die Keramik eine relative Dielektrizitätskonstante □r, etwa im Bereich von 8 bis 13, insbesondere von 9 bis 10, aufweist.

16. Transponder (1) nach einem der Ansprüche 1 bis 15, **dadurch gekennzeichnet, dass** durch die Verwendung eines Koaxialkabels (40) das Transponder-Element räumlich von der Antenne (21, 22, 23, 24) getrennt ist.

17. Transponder (1) nach einem der Ansprüche 1 bis 16, **dadurch gekennzeichnet, dass** der Transponder (1) auf die Anwendung abgestimmte mechanische Bauelemente, und/oder Vorrichtungen zur Befestigung aufweist.
